# EUROPEAN PATENT SPECIFICATION

(11) **EP 0 473 801 B1**
(45) Date of publication and mention of the grant of the patent: **02.11.1995**
(21) Application number: 90116815.3
(22) Date of filing: 01.09.1990
(51) Int. Cl.: B29C 57/04

(54) **A device for forming internal grooves in plastic pipes and pipe portions**
Vorrichtung zum Formen von Innennuten in Kunststoffrohren und Kunststoffrohrteilen
Appareil pour former des rainures à l'intérieur de tuyaux en matière plastique et sections de tuyaux ainsi produites

(43) Date of publication of application: 11.03.1992
(73) Proprietor: TOOLER OY, SF-15561 Nastola (FI)
(72) Inventor: Suorajärvi, Veijo Antero, SF-15560 Nastola (FI)
(74) Representative: Patentanwälte Dipl.-Ing. R. Splanemann Dr. B. Reitzner Dipl.-Ing. K. Baronetzky

(56) References cited:
- EP-A- 0 052 581
- DE-A- 2 515 461
- FR-A- 2 437 924
- JP-A- 5 783 423
- US-A- 3 940 227

## Description

This invention relates to a device for forming expansions, particularly deep internal grooves, such as sealing grooves, in plastic pipes and pipe portions, comprising a form ring intended for forming the internal profile of the expansion, the periphery of the form ring being divided into two segment groups radially displaceable inwards to disassemble and detach the form ring from the pipe after the shaping of the expansion; a guide ring or the like displaceable coaxially through the form ring; and means for moving the segments radially, said means being formed by two groups of inclined surfaces, one for each segment group.

From EP-A-052 581 and JP-A-5 783 423 it is known to provide inclined surfaces for moving the segments radially, with the angles being 12° and 6°, respectively. These angles have to be small as when using big angles the segments would stick to each other when the (outer) segments are moving inwardly. The disadvantage of these devices is that for a predetermined amount of radial movement the devices require plenty of space.

In the manufacture of plastic pipes and pipe portions comprising an internal or negative groove, such as a sealing groove, it is known to use a form ring the periphery of which is divided into segments or pieces which can be displaced radially inwards by means of various mechanical devices. The greatest dimension of the form ring is thereby decreased, and the ring can be withdrawn through the pipe end. A drawback of devices known from the prior art, however, is that the greatest dimension of the form ring is not even in the disassembled state notably smaller than in the operating position, because the different segments hamper the movements of each other in the very small space available. For this reason it has been impossible to manufacture internal grooves requiring high dimensional accuracy and having a great depth as compared with the pipe diameter.

Finnish Patent Specification 45629 discloses a structure in which segments in one segment group of the form ring are first displaced radially inwards apart from the segments of the other group while the segments in this other group remain in position in the radial direction but are displaced axially over a distance such that they remain outside the axial dimension of the first-mentioned segments. Only then the segments of the other group are displaced radially inwards.

Finnish Patent Specification 51064 discloses a structure in which the segments are arranged to be moved positively along inclined surfaces of a mandrel. The surface groups are in an axially displaced relationship with respect to each other. The operation of this kind of device is reliable and the structure is simple; the device, however, takes plenty of room and its operation is slow, in addition to which the provision of efficient cooling in the device is difficult.

The object of the present invention is to provide a device which avoids the above-mentioned drawbacks. The invention is characterized in that the surfaces between the guide ring and the segments in the first segment group form a larger angle with respect to the axis of the mandrel than the respective surfaces between the guide ring and the segments in the second group, the ratio of the tangents of the angles of inclination of the first surfaces and the second surfaces with respect to the axis of the mandrel being between 1.2 and 1.6.

The device of this new structure is small in size, and the movements of its segments are short. The efficient cooling provides a considerably improved efficiency as compared with, e.g., the device of Finnish Patent Specification 51064.

In the following the invention will be described in greater detail by means of embodiments shown in the attached drawings.

Figure 1 is a longitudinal sectional view (Figure 2, section A-A) of one embodiment of the device of the invention when the form ring is in its operational position.

Figure 2 is a cross-section of Figure 1 along the line B-B.

Figure 3 shows the device of Figure 1 (Figure 4, section C-C) when the segments in the first and second segment groups have been displaced radially into their inner position so that the pipe to be shaped can be detached.

Figure 4 is a cross-sectional view D-D of Figure 3.

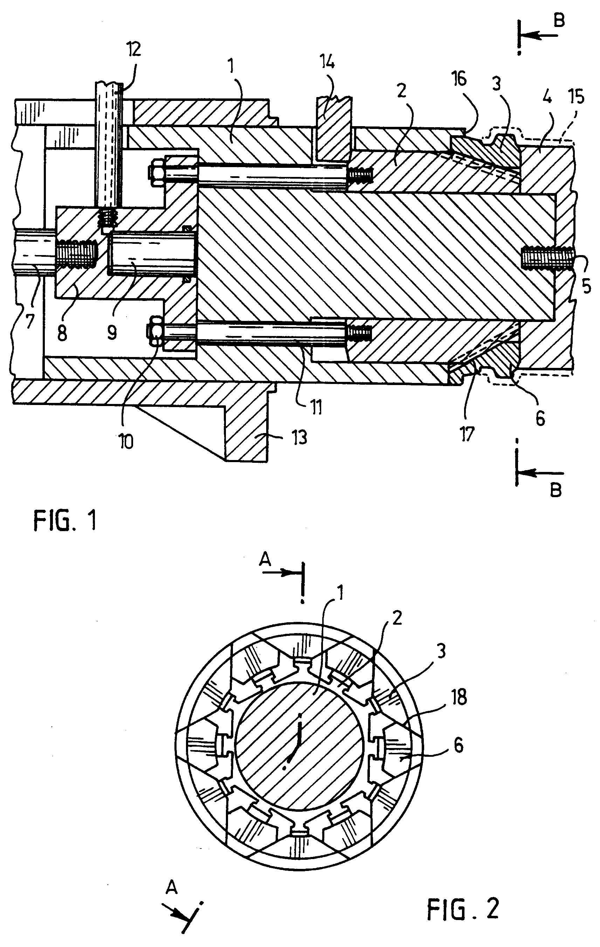

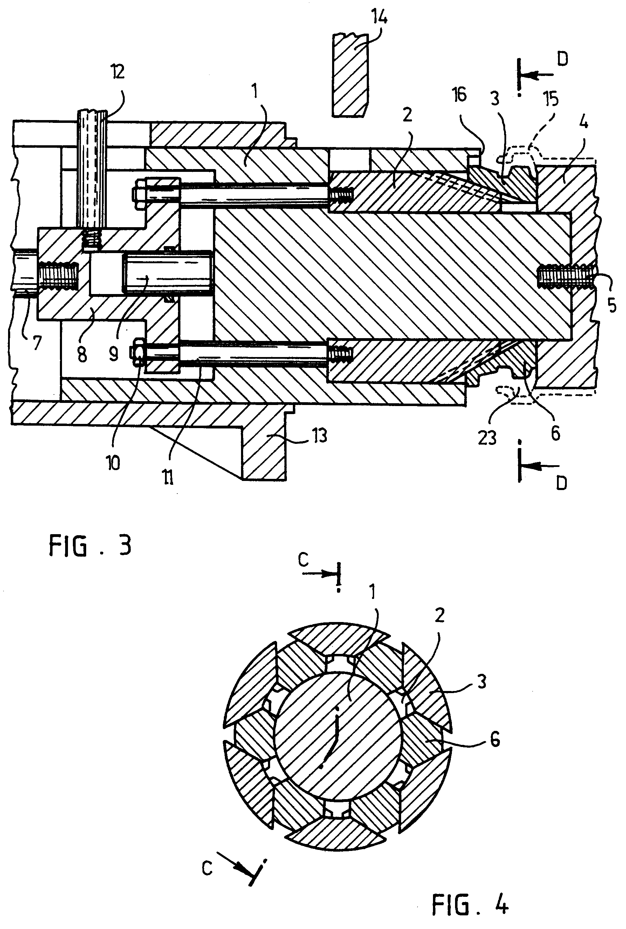

In the initial position of Figure 1, a form ring 6, 3 is in its operational position, forming a continuous ring around a mandrel. The periphery of the form ring is divided into two segment groups 6, 3. Segments 6 in the first segment group are, in a manner known per se, so shaped at the edges that they can be displaced inwards from the periphery of the ring (Figure 4) without being hampered by segments 3 in the second group.

In Figures 1 and 2, a locking wedge 14 keeps a guide ring 2 and through it the form ring formed by the segments 6 and 3 in position. To reduce the dimension of the form ring 6, 3 the locking wedge 14 is withdrawn as shown in Figure 3. The hydraulic cylinder 7 is thereby released from pressure and the hydraulic pressure is transferred through a pipe 12 behind a piston 9, so that parts 8, 9, 11 and 2 are displaced into the position shown in Figure 3. The guide ring 2 comprises inclined surfaces provided with T-shaped grooves, which surfaces draw the segments 6 and 3 radially to the inner position shown in Figures 3 and 4. The mandrel can now be withdrawn.

The inner surface of a plastic pipe 15 to be produced is formed around a metal pipe 4 the end of which is arranged to bear against the edge of the form ring 6, 3.

After the end of the plastic pipe 15 has been finished, the guide ring 2 is displaced outwards from the end of the plastic pipe 15, whereby the segments 6, 3 in both groups start to slide along the inclined surfaces 17 of the guide ring 2 towards the geometric axis of the mandrel. These inclined surfaces 17 are provided with T-shaped grooves while the segments 6, 3 are provided with corresponding inclined slide surfaces fitting in the T-shaped grooves, and with guide projections. After the guide ring 2 is displaced outwards from the end of the plastic pipe 15 to the position shown in Figure 3, both segment groups 6, 3 have reached their inner position.

It is to be noted that the slide surface 17 between the guide ring 2 and the segments 6 of the first group is at a sharper angle with respect to the axis of the mandrel than the corresponding slide surface between the guide ring 2 and the second segment group 3. For this reason the first segments 6 move radially towards the axis of the mandrel more rapidly than the second segments 3. The first segments 6 thus give way to the second segments 3. As appears from Figures 3 and 4, the first segments 6 make contact with the surface of a cylindrical body part 1 of the mandrel in the inner position of the form ring 6, 3 while the other segments 3 remain slightly above this surface. The angles of inclination of the first surfaces 17 and the second surfaces with respect to the axis of the mandrel are, e.g., between 25 and 35° and 15 and 25°, respectively, preferably about 30° and 20°, respectively. The ratio of the tangents of these angles of inclination is between 1.2 and 1.6, preferably about 1.4.

More precisely, the withdrawal of the mandrel takes place in the following way. The cylinder 7 draws the guide ring 2 through the parts 8, 10, and 11, and the guide ring, in turn, bears against the body part 1, so that the whole mandrel can be removed from within the pipe 15. When inserting the mandrel, the pressure keeps the segment 6 and 3 constricted, acting along the pipes 12 behind the piston 9. In Figure 3, the hydraulic cylinder 7 pushes the mandrel assembly. When the surface 16 reaches a mould slab, the pressure in the pipe 12 is released. The cylinder 7 thereby further pushes the segments 6 and 3 into the outer operating position through the parts 8, 10 and 11 and the guide ring 2. When the mould is closed and the wedge 14 is in the locking position, the mandrel is again in operating position.

The piston 9 and a hydraulic circuit 12 can be replaced with a compression spring, for example.

In the exemplifying embodiment the form ring is formed by two symmetrically arranged segment groups 6, 3 both comprising 6 segments.

It is to be mentioned that the whole operation can be effected by means of a single external source of power and movement in one direction. The different segments 6, 3 thereby form a closed ring for the compression step, whereby the shape of the ring does not change under load. A major advantage is that the groove can be formed simultaneously with the production of the pipe 15, whereby the form ring 6, 3 can be disassembled and easily removed from a groove 23 without damaging it after the hardening of the casting, injection moulding or pressure material.

It is to be noted that the device of the invention can also be applied in connection with products formed by compression, casting or injection moulding. In this case it can, for instance, form part of the mould.

## Claims

1. A device for forming expansions, particularly deep internal grooves, such as sealing grooves, in plastic pipes and pipe portions, comprising a form ring (6, 3) intended for forming the internal profile of the expansion, the periphery or the form ring being divided into two segment groups (6, 3) radially displaceable inwards to disassemble and detach the form ring from the pipe (15) after the shaping of the expansion; a guide ring (2) or the like displaceable coaxially through the form ring (6, 3); and means (17) for moving the segments (6, 3) radially, said means being formed by two two groups of inclined surfaces (17), one for each segment group (6, 3), with the surfaces (17) between the guide ring (2) and the segments (6) in the first segment group form a larger angle with respect to the axis of the mandrel than the respective surfaces between the guide ring (2) and the segments (3) in the second group, characterized in that the ratio of the tangents of the angles of inclination of the first surface (17) and the second surfaces with repect to the axis of the mandrel being between 1.2 and 1.6 and that the guide ring (2) is radially coupled with both segments groups (6, 3).

2. A device according to claim 1, characterized in that said ratio is about 1.4.

3. A device according to claim 1, characterized in that the magnitude of the angles of inclination of the first surfaces (17) and the second surfaces with respect to the axis of the mandrel is between 25 and 35°, preferably about 30°, and between 15 and 20°, preferably about 20°, respectively.

## Patentansprüche

1. Vorrichtung zum Ausbilden von Aufweitungen, insbesondere tiefen Innennuten, wie z.B. Dichtrillen, in Kunststoffrohren und -rohrabschnitten, die folgendes aufweist: einen Formring (6, 3), der zum Ausbilden des Innenprofils der Aufweitung bestimmt ist, wobei der Umfang des Formrings in zwei Segmentgruppen (6, 3) geteilt ist, die radial nach innen verschiebbar sind, um den Formring nach dem Formen der Aufweitung auseinanderzunehmen und vom Rohr (15) abzunehmen; einen Führungsring (2) oder dgl., der durch den Formring (6, 3) koaxial verschiebbar ist; und eine Vorrichtung (17) zum radialen Bewegen der Segmente (6, 3), wobei die Vorrichtung aus zwei Gruppen geneigter Oberflächen (17), eine für jede Segementgruppe (6, 3), ausgebildet ist, wobei die Oberflächen (17) zwischen dem Führungsring (2) und den Segmenten (6) in der ersten Segmentgruppe im Bezug auf die Dornachse einen größeren Winkel bilden als die jeweiligen Oberflächen zwischen dem Führungsring (2) und den Segmenten (3) in der zweiten Gruppe, dadurch **gekennzeichnet,** daß das Verhältnis der Tangenten der Neigungswinkel der ersten Oberfläche (17) und der zweiten Oberflächen im Bezug auf die Dornachse zwischen 1,2 und 1,6 beträgt, und daß der Führungsring (2) radial mit beiden Segmentgruppen (6, 3) verbunden ist.

2. Vorrichtung nach Anspruch 1, dadurch gekennzeichnet, daß das Verhältnis ungefähr 1,4 beträgt.

3. Vorrichtung nach Anspruch 1, dadurch gekennzeichnet, daß die Größe der Neigungswinkel der ersten Oberflächen (17) und der zweiten Oberflächen im Bezug auf die Dornachse zwischen 25 und 35°, bevorzugt etwa 30°, bzw. zwischen 15 und 20°, bevorzugt etwa 20°, beträgt.

## Revendications

1. Dispositif pour former des expansions, en particulier des gorges internes profondes, telles que des gorges d'étanchéité, dans des tuyaux en plastique et des parties de tuyaux, comprenant une bague de forme (6, 3) destinée à former le profil interne de l'expansion, la périphérie de la bague de forme étant divisée en deux groupes de segments (6, 3) radialement déplaçables vers l'intérieur pour désassembler et détacher la bague de forme du tuyau (15) après la mise en forme de l'expansion ; une bague de guidage (2) ou similaire déplaçable coaxialement dans la bague de forme (6, 3) ; et un moyen (17) pour déplacer les segments (6, 3) radialement, ledit moyen étant formé de deux groupes de surfaces inclinées (17), une pour chaque groupe de segments (6, 3), les surfaces (17) entre la bague de guidage (2) et les segments (6) du premier groupe de segments formant un angle plus grand par rapport à l'axe du mandrin que les surfaces respectives entre la bague de guidage (2) et les segments (3) du deuxième groupe, caractérisé en ce que le rapport des tangentes des angles d'inclinaison de la première surface (17) et des deuxièmes surfaces par rapport à l'axe du mandrin se situe entre 1,2 et 1,6 et que la bague de guidage (2) est radialement couplée avec les deux groupes de segments (6, 3).

2. Dispositif selon la revendication 1, caractérisé en ce que ledit rapport est d'environ 1,4.

3. Dispositif selon la revendication 1, caractérisé en ce que la grandeur des angles d'inclinaison des premières surfaces (17) et des deuxièmes surfaces par rapport à l'axe du mandrin est, respectivement, entre 25 et 35°, de préférence près de 30°, et entre 15 et 20°, de préférence près de 20°.
